# EUROPEAN PATENT SPECIFICATION

(11) **EP 4 191 950 B1**
(45) Date of publication and mention of the grant of the patent: **22.10.2025**
(21) Application number: 20949042.4
(22) Date of filing: 12.08.2020
(51) Int. Cl.: H04L 12/14, H04M 15/00, H04W 4/24

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 07.06.2023
(73) Proprietor: Huawei Technologies Co., Ltd., Shenzhen, Guangdong 518129 (CN)
(72) Inventor: ZHOU, Xiaoyun, Shenzhen, Guangdong 518129 (CN); LI, Wenqiang, Shenzhen, Guangdong 518129 (CN); XU, Yaoqiang, Shenzhen, Guangdong 518129 (CN); ZONG, Zaifeng, Shenzhen, Guangdong 518129 (CN)
(74) Representative: Körber, Martin Hans
(86) International application number: PCT/CN2020/108743
(87) International publication number: WO 2022/032543

(56) References cited:
- WO-A1-2019/158101
- CN-A- 110 999 344
- CN-A- 111 052 800
- ERICSSON: "QoS rule structure improvement", vol. SA WG2, no. Newport Beach, California, USA;, 10 June 2018 (2018-06-10), XP051458347, Retrieved from the Internet <URL:http://www.3gpp.org/ftp/Meetings%5F3GPP%5FSYNC/SA/Docs> [retrieved on 20180610]
- ANONYMOUS: "3rd Generation Partnership Project; Technical Specification Group Services and System Aspects; Study on Enhancement of Network Slicing (Release 16)", 3GPP STANDARD; TECHNICAL REPORT; 3GPP TR 23.740, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 19 December 2018 (2018-12-19), pages 1 - 70, XP051591221
- ERICSSON: "Correct access challenge", 3GPP DRAFT; C3-202480, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. Online Meeting ;20200416 - 20200424, 25 April 2020 (2020-04-25), Mobile Competence Centre ; 650, route des Lucioles ; F-06921 Sophia-Antipolis Cedex ; France , XP051878457
- CHINA TELECOM, HUAWEI: "Type of core network", 3GPP DRAFT; C3-194079-CORE NETWORK TYPE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. Portoroz, Slovenia; 20191007 - 20191011, 30 September 2019 (2019-09-30), Mobile Competence Centre ; 650, route des Lucioles ; F-06921 Sophia-Antipolis Cedex ; France , XP051788266

## Description

### TECHNICAL FIELD

This application relates to the field of wireless communication technologies, and in particular, to a communication method and apparatus.

### BACKGROUND

In a mobile cellular network, a function such as charging may be implemented by allocating an accounting session (accounting session) to a terminal device. In a 5th generation system (the Srd generation system, SGS), a session management function (session management function, SMF) network element allocates an accounting session based on a protocol data unit (protocol data unit, PDU) session granularity, that is, allocates different accounting sessions to different PDU sessions. However, in an evolved packet system (evolved packet system, EPS), the SMF may allocate different accounting sessions to different EPS bearers (bearers).

In conclusion, the SMF network element allocates accounting sessions based on different granularities in different mobile cellular networks. Therefore, when the terminal device is handed over from the 5GS to the EPS or handed over from the EPS to the 5GS, how to update the accounting session is an urgent problem to be resolved.

ERICSSON: "QoS rule structure improvement", 3GPP DRAFT; TSG SAWG2 Meeting #127bis, S2-186006, 28 May-1 June, Newport Beach, California, USA discloses QoS rules to reflect the QoS Flow Description sent to a UE.

ANONYMOUS: "3rd Generation Partnership Project; Technical Specification Group Services and System Aspects; Study on Enhancement of Network Slicing (Release 16)", 3GPP TR 23.740, V 16.0.0 (2018-12) discloses nonroaming and roaming deployment scenarios and system impacts when the 5GS is not able to support all possible combination of S-NSSAIs for the UE, aspects of mutually exclusive access to Network Slices, enhancement for the Network Slicing interworking with EPC for Connected and Idle modes, and the provision of Network Slice Access authentication and authorization specific for the Network Slice Access authorization.

### SUMMARY

An objective of implementations of this application is to provide a communication method and apparatus, to resolve a problem of how to update an accounting session when a terminal device is handed over between different mobile cellular networks. The invention is defined in the independent claims. Advantageous features are defined in the dependent claims. Embodiments which are not covered by the invention are to be considered as examples necessary for understanding the invention.

According to a first aspect, an embodiment of this application provides a communication method, including: After establishing, for a terminal device, a protocol data unit session that is in a first network and that includes a first quality of service flow, a session management function network element may indicate, to an authentication, authorization, and accounting server by using a first message, an identifier of a first accounting session corresponding to the first quality of service flow, wherein the identifier of an accounting session comprises an accounting session identifier, acct-session-ID, or a session identifier, session-ID. When the terminal device is handed over from the first network to a second network, if determining to map the first quality of service flow to a first bearer in the second network, wherein the first and second network respectively comprises a 5th generation system, 5GS, and an evolved packet system, EPS, or vice versa, the session management function network element may send, to the authentication, authorization, and accounting server, a second message including the identifier of the first accounting session corresponding to the first quality of service flow and information about the first bearer, wherein the information about the first bearer comprises at least one of a radio access type corresponding to the first bearer, and a quality of service profile corresponding to the first bearer, so that the second message indicates the authentication, authorization, and accounting server to update the first accounting session.

According to the foregoing process, when the terminal device is handed over from the first network to the second network, the session management function network element indicates the authentication, authorization, and accounting server to update the first accounting session based on the information about the first bearer, so that after the terminal device is handed over to the second network, service access control, for example, access control, charging, and service provisioning, is performed based on information about the first accounting session for a service transmitted by the terminal device by using the first bearer.

In a possible implementation, the protocol data unit session further includes a second quality of service flow, and the session management function network element may indicate, to the authentication, authorization, and accounting server by using a third message, an identifier of a second accounting session corresponding to the second quality of service flow. When the terminal device is handed over from the first network to the second network, if determining to map the second quality of service flow to the first bearer, the session management function network element may send a fourth message to the authentication, authorization, and accounting server, where the fourth message includes the identifier of the second accounting session corresponding to the second quality of service flow and the information about the first bearer, and the fourth message indicates the authentication, authorization, and accounting server to update the second accounting session.

According to the foregoing process, when the terminal device is handed over from the first network to the second network, the session management function network element indicates the AAA server to update the second accounting session based on the information about the first bearer, so that after the terminal device is handed over to the second network, service access control, for example, access control, charging, and service provisioning, is performed based on information about the second accounting session for a service transmitted by the terminal device by using the first bearer.

In a possible implementation, after the session management function network element sends the second message to the authentication, authorization, and accounting server, the method further includes: The session management function network element receives a disconnection request message from the authentication, authorization, and accounting server, where the disconnection request message includes the identifier of the first accounting session, and the disconnection request message requests to delete a resource corresponding to the first quality of service flow. The session management function network element sends an update bearer request to a serving gateway, where the update bearer request requests to delete a resource corresponding to the first quality of service flow.

According to the foregoing method, operations such as modification and deletion may be flexibly performed on the accounting session by carrying the identifier of the accounting session.

In a possible implementation, the protocol data unit further includes a third quality of service flow, and the method further includes: The session management function network element maps the third quality of service flow to the first bearer. The session management function network element sends, to the authentication, authorization, and accounting server, first stop indication information and an identifier of a third accounting session corresponding to the third quality of service flow, where the first stop indication information indicates the authentication, authorization, and accounting server to terminate the third accounting session.

According to the foregoing method, because a plurality of quality of service flows are mapped to the first bearer, only an accounting session corresponding to one of the quality of service flows may be updated, for example, only the first accounting session corresponding to the first quality of service flow is updated, to avoid managing excessive redundant accounting sessions, so that accounting session management efficiency is improved.

In a possible implementation, the protocol data unit session further includes a fourth quality of service flow, and the method further includes: The session management function network element sends a fifth message to the authentication, authorization, and accounting server, where the fifth message includes an identifier of a fourth accounting session corresponding to the fourth quality of service flow. After determining that the terminal device is handed over from the first network to the second network, the session management function network element determines that the fourth quality of service flow is not mapped to a bearer in the second network. The session management function network element sends, to the authentication, authorization, and accounting server, second stop indication information and the identifier of the fourth accounting session corresponding to the fourth quality of service flow, where the second stop indication information indicates the authentication, authorization, and accounting server to terminate the fourth accounting session.

According to the foregoing method, because the fourth quality of service flow is not mapped to any bearer, the fourth accounting session corresponding to the fourth quality of service flow may be terminated, to avoid managing excessive redundant accounting sessions, so that accounting session management efficiency is improved.

In a possible implementation, the identifier of the first accounting session includes a first charging identifier, an address of the session management function network element, and identification information of the first quality of service flow, and the first charging identifier is a charging identifier allocated by the session management function network element to the protocol data unit session.

In a possible implementation, the identifier of the second accounting session includes a first charging identifier, an address of the session management function network element, and identification information of the second quality of service flow.

### (excised)

In a possible implementation, the information about the first bearer further includes a second charging identifier allocated by the session management function network element to the first bearer.

In a possible implementation, the method further includes: The session management function network element maps the first bearer to a corresponding fifth quality of service flow in the first network after determining that the terminal device is handed over from the second network to the first network. The session management function network element sends a sixth message to the authentication, authorization, and accounting server, where the sixth message includes the identifier of the first accounting session and information corresponding to the fifth quality of service flow, and the sixth message indicates the authentication, authorization, and accounting server to update the first accounting session.

According to the foregoing process, after the terminal device is handed over from the second network to the first network, the session management function network element indicates the authentication, authorization, and accounting server to update the first accounting session based on the information corresponding to the fifth quality of service flow, so that after the terminal device is handed over to the first network, service access control, for example, access control, charging, and service provisioning, is performed based on the information about the first accounting session for a service transmitted by the user by using the fifth quality of service flow.

In a possible implementation, the information corresponding to the fifth quality of service flow includes one or more of the following:
a radio access type corresponding to the fifth quality of service flow, and a quality of service profile corresponding to the fifth quality of service flow.

In a possible implementation, the information corresponding to the fifth quality of service flow further includes the first charging identifier.

In a possible implementation, the method further includes: The session management function network element maps the first bearer to a corresponding sixth quality of service flow in the first network after determining that the terminal device is handed over from the second network to the first network. The session management function network element sends a seventh message to the authentication, authorization, and accounting server, where the seventh message includes the identifier of the second accounting session and information corresponding to the sixth quality of service flow, and the seventh message indicates the authentication, authorization, and accounting server to update the second accounting session.

According to a second aspect, this application further provides a communication apparatus. The communication apparatus has a function of implementing any method provided in the first aspect. The communication apparatus may be implemented by hardware, or may be implemented by hardware executing corresponding software. The hardware or software includes one or more units or modules corresponding to the foregoing function.

In a possible implementation, the communication apparatus includes a processor. The processor is configured to support the communication apparatus in performing a corresponding function of the communication apparatus in the foregoing method. The communication apparatus may further include a memory. The memory may be coupled to the processor, and the memory stores program instructions and data that are necessary for the communication apparatus. Optionally, the communication apparatus further includes a communication interface. The communications interface is configured to support communication between the communication apparatus and a device such as an authentication, authorization, and accounting server.

In a possible implementation, the communication apparatus includes corresponding function units, configured to implement the steps in the foregoing method. The function may be implemented by hardware, or may be implemented by hardware executing corresponding software. The hardware or software includes one or more units corresponding to the foregoing function.

In a possible implementation, a structure of the communication apparatus includes a processing unit and a communication unit. These units may perform corresponding functions in the foregoing method examples. For details, refer to the descriptions in the method according to the first aspect. Details are not described herein again.

According to a third aspect, a computer program product is provided. The computer program product includes computer program code. When the computer program code is run on a computer, the computer is enabled to perform the method according to any one of the first aspect or the possible implementations of the first aspect, or the computer is enabled to perform the method according to any one of the third aspect or the possible implementations of the third aspect.

### BRIEF DESCRIPTION OF DRAWINGS

FIG. 1 is a schematic diagram of an architecture of a network to which an embodiment of this application is applicable;
FIG. 2 is a schematic flowchart of a communication method according to an embodiment of this application;
FIG. 3 is a schematic flowchart of establishing a PDU session in a 5GS according to an embodiment of this application;
FIG. 4 is a schematic diagram of updating an accounting session during SGS-to-EPS handover according to an embodiment of this application;
FIG. 5 is a schematic diagram of updating an accounting session during EPS-to-5GS handover according to an embodiment of this application;
FIG. 6 is a schematic diagram of updating an accounting session during SGS-to-EPS handover according to an embodiment of this application;
FIG. 7 is a schematic diagram of establishing an accounting session for a bearer in an EPS according to an embodiment of this application;
FIG. 8 is a schematic diagram of updating an accounting session during EPS-to-5GS handover according to an embodiment of this application;
FIG. 9 is a schematic diagram of a structure of a communication apparatus according to an embodiment of this application, and
FIG. 10 is a schematic diagram of a structure of a communication apparatus according to an embodiment of this application.

### DESCRIPTION OF EMBODIMENTS

The following further describes in detail embodiments of this application with reference to the accompanying drawings.

The technical solutions in embodiments of this application may be applied to various mobile cellular systems such as 5GS and EPS. The 5GS includes but is not limited to a new radio (new radio, NR) system. The EPS includes but is not limited to a long term evolution (long term evolution, LTE) system, an LTE frequency division duplex (frequency division duplex, FDD) system, an LTE time division duplex (time division duplex, TDD), and the like. This is not limited herein.

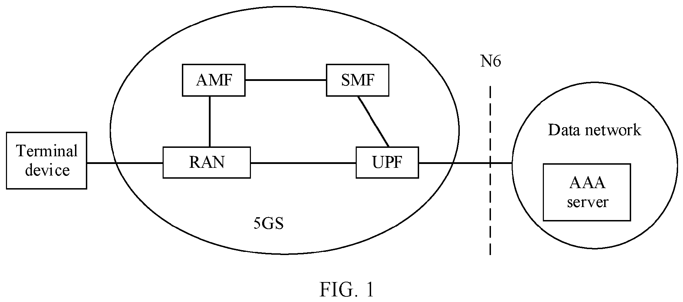

FIG. 1 is a schematic diagram of an architecture of a network to which an embodiment of this application is applicable. In FIG. 1, after a terminal device accesses a 5GS via a radio access network (radio access network, RAN) device, an authentication, authorization, and accounting (authentication, authorization, and accounting, AAA) server in a data network (data network) can perform authentication, authorization, and accounting on the terminal device. The AAA server may support a remote authentication dial-in user service (remote authentication dial-in user service, RADIUS) and the Diameter protocol. The network shown in FIG. 1 further includes an access and mobility management function (access and mobility management function, AMF) network element, an SMF network element, a user plane function (user plane function, UPF), and the like. For functions of the foregoing network elements, refer to descriptions in the existing technology. Details are not described herein.

As described above, in the 5GS, the SMF network element allocates different accounting sessions to different PDU sessions. Each accounting session is corresponding to one accounting session identifier (accounting session identifier, acct-session-ID) or session identifier (session-ID). When the 5GS communicates with the AAA server by using the RADIUS protocol, an identifier corresponding to the accounting session is acct-session-ID. When the 5GS communicates with the AAA server by using the Diameter protocol, an identifier corresponding to the accounting session is (session-ID), and the accounting session identifier or session identifier uniquely identifies an accounting session. The accounting session identifier includes information such as a charging identifier (charging ID) and an address of the SMF network element. For example, the address of the SMF network element may be a charging address of the SMF network element, and may be specifically information such as an internet protocol (internet protocol, IP) address of the SMF network element.

In the procedure of embodiments of this application, an example in which an identifier corresponding to an accounting session is acct-session-ID is used for description. During actual application, the identifier corresponding to the accounting session may alternatively be session-ID. A difference lies in that a value of the session-ID is dynamically allocated by the session management function network element, and is a globally unique value.

In the 5GS, the SMF network element allocates a charging identifier to a PDU session. Therefore, charging identifiers in accounting session identities corresponding to a plurality of quality of service (quality of service, QoS) flows (flows) in the PDU session are the same. In other words, the plurality of QoS flows in the PDU session are corresponding to the same accounting session identifier, and accounting session identifier of the PDU session cannot identify different QoS flows in the PDU session.

The PDU session in the 5GS is referred to as a packet data network (packet data network, PDN) connection in the EPS. One PDN connection has a plurality of bearer (bearers). In the EPS, the SMF network element may allocate different charging identifiers to different bearers. In other words, each bearer in the PDN connection is corresponding to a different accounting session identifier.

If the terminal device is handed over between different networks, for example, handed over from the 5GS to the EPS, the plurality of QoS flows included in the PDU session in the 5GS are corresponding to a same accounting session, and bearers that are in the EPS and that are equivalent to the QoS flows are corresponding to different accounting sessions. In different networks, accounting session allocation granularities are different. Currently, there is no clear solution to updating accounting sessions corresponding to a plurality of QoS flows belonging to a PDU session after the terminal device is handed over to the EPS.

A terminal device in embodiments of this application may be a device having a wireless transceiver function or a chip that can be disposed in any device, and may also be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

An access network device may be a next-generation base station (generation nodeB, gNB) in the 5GS, may be an evolved NodeB (evolutional nodeB, eNB) in the EPS, or the like.

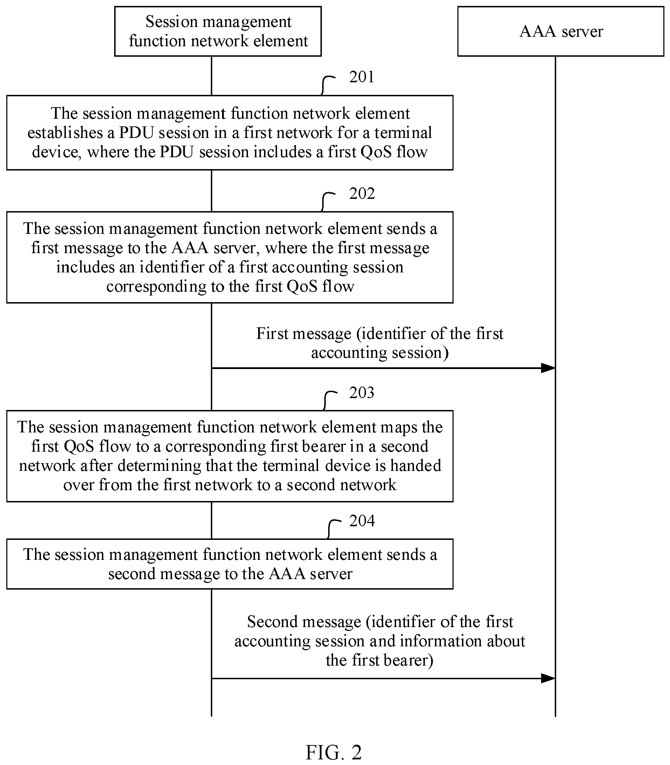

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems. With reference to the foregoing descriptions, FIG. 2 is a schematic flowchart of a communication method according to an embodiment of this application. Refer to FIG. 2. The method includes the following steps.

Step 201: A session management function network element establishes a PDU session in a first network for a terminal device, where the PDU session includes a first QoS flow.

The first network may be a 5GS. Correspondingly, the session management function network element may be an SMF network element, or may be a network element that has functions of both the SMF network element and a PDN gateway for control plane (packet data network gateway for control plane, PGW-C).

A specific manner in which the session management function network element establishes the PDU session is not limited in this embodiment of this application, and a specific process is not described again. In addition to the first QoS flow, the PDU session may further include a second QoS flow, a third QoS flow, a fourth QoS flow, and the like. A specific quantity of QoS flows included in the PDU session is not limited in this embodiment of this application.

It should be noted that the QoS flows included in the PDU session may be classified into a default QoS flow and a dedicated QoS flow. The first QoS flow may be a default QoS flow or may be a dedicated QoS flow. This is not limited in this embodiment of this application.

Step 202: The session management function network element sends a first message to an AAA server, where the first message includes an identifier of a first accounting session corresponding to the first QoS flow.

The identifier of the first accounting session is allocated by the session management function network element. In this embodiment of this application, the identifier of the first accounting session may include but is not limited to the following information: a first charging identifier, an address of the session management function network element, and identification information of the first QoS flow. The first charging identifier is a charging identifier allocated by the session management function network element to the PDU session, and may be, for example, an identifier allocated to the default QoS flow in the PDU session. The address of the session management function network element may be an IP address of the session management function network element. The identification information of the first QoS flow may be a QoS flow identifier (QoS flow identifier, QFI) of the first QoS flow or other information that is allocated by the session management function network element and that identifies the first QoS flow.

It should be noted that, in the existing technology, the PDU session may include a plurality of different QoS flows, but the accounting session is allocated for the PDU session. In other words, accounting is performed for the PDU session in the existing technology. There is no specific implementation of performing accounting for these QoS flows separately. In this embodiment of this application, for each QoS flow in the PDU session, identification information of the QoS flow is added to an accounting session identifier of the PDU session, so that different accounting session identifiers are allocated to different QoS flows, and accounting can be separately performed for each QoS flow in the PDU session.

Step 203: The session management function network element maps the first QoS flow to a corresponding first bearer in a second network after determining that the terminal device is handed over from the first network to a second network.

Specifically, the session management function network element may determine an identifier of the first bearer that is corresponding to the first QoS flow and that is in the second network, and the session management function network element may send the identifier of the first bearer to the second network, to request the second network to establish the first bearer.

The second network may be an EPS. A manner in which the session management function network element specifically determines that the terminal device is handed over to the second network is not limited in this embodiment of this application. For details, refer to the descriptions in the existing technology. Details are not described herein.

Step 204: The session management function network element sends a second message to the AAA server.

The second message includes the identifier of the first accounting session corresponding to the first QoS flow and information about the first bearer, the information about the first bearer may be used to update the first accounting session, and the second message indicates the AAA server to update the first accounting session.

The information about the first bearer includes at least one of the following:
a radio access type corresponding to the first bearer, a QoS profile corresponding to the first bearer, a packet filter corresponding to the first bearer, and a second charging identifier allocated by the session management function network element to the first bearer.

According to the foregoing process, when the terminal device is handed over from the first network to the second network, the session management function network element indicates the AAA server to update the first accounting session based on the information about the first bearer, so that after the terminal device is handed over to the second network, service access control, for example, access control, charging, and service provisioning, is performed based on information about the first accounting session for a service transmitted by the terminal device by using the first bearer.

As described above, in this embodiment of this application, the session management function network element may establish the PDU session for the terminal device in the first network, and allocate different accounting session identifiers to different QoS flows in the PDU session. Details are described below.

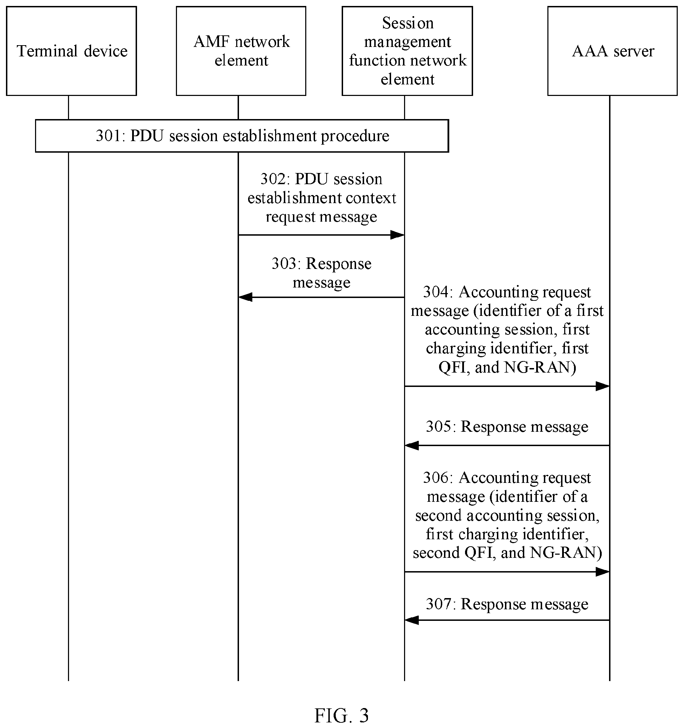

As shown in FIG. 3, when a terminal device is accessed via a 5GS, an accounting session corresponding to a QoS flow may be established, and an accounting session of each QoS flow is uniquely identified by using an identifier of the accounting session, where the identifier of the accounting session includes identification information of the QoS flow. It should be noted that the procedure shown in FIG. 3 is based on related content about PDU session establishment in the existing document TS 23.502. For details, refer to the document.

Step 301: The terminal device initiates a PDU session establishment procedure by sending a PDU session establishment request message, where the PDU session establishment request message includes information such as authentication and authorization.

Step 302: An AMF network element sends a PDU session establishment context request message to a session management function network element.

A specific name of the message is not limited, and may be, for example, Nsmf_PDUSession_CreateSMContext Request. The message may include the information such as authentication and authorization.

Step 303: The session management function network element sends a response message to the AMF network element.

Optionally, if an N4 session corresponding to the PDU session has not been established, the session management function network element needs to initiate an N4 session establishment procedure. A specific process is not described.

Further, a network side further needs to perform a process such as authentication and authorization on the terminal device, and the specific process is not described. For details, refer to the descriptions in a document such as TS 23.502.

It is assumed that in the procedure shown in FIG. 3, the PDU session includes a first QoS flow, a second QoS flow, a third QoS flow, and a fourth QoS flow. How to establish an accounting session corresponding to each QoS flow is separately described below.

For the first QoS flow in the PDU session, an accounting session corresponding to the first QoS flow may be established by performing the following steps.

Step 304: The session management function network element sends an accounting request (accounting request) message to the AAA server, to request to start accounting for the first QoS flow in the PDU session.

The accounting request message may be the first message in the procedure in FIG. 2, and content carried in the accounting request message is not limited in this embodiment of this application. The content may include but is not limited to an identifier of the terminal device (or referred to as a user), an address of the terminal device, an identifier (denoted as an accounting session identifier 1 below) of a first accounting session corresponding to the first QoS flow, a first charging identifier (an identifier allocated by the session management function network element to the PDU session), a QFI (referred to as a first QFI below) of the first QoS flow, a radio access type (where the radio access type in the 5GS is next generation RAN (next generation RAN, NG-RAN)), a packet filter (packet filter) of the first QoS flow, and a QoS profile corresponding to the first QoS flow.

The accounting session identifier 1 may include the following information: the first charging identifier, an address of the session management function network element, and identification information of the first QoS flow. The identification information of the first QoS flow may be the first QFI of the first QoS flow or other information that is allocated by the session management function network element and that identifies the first QoS flow.

Step 305: The AAA server returns a corresponding response message.

Optionally, when the session management function network element determines to create a new second QoS flow in the PDU session, the session management function network element may initiate a second QoS flow establishment procedure. A specific process is not described. After the second QoS flow is established in the PDU session, an accounting session corresponding to the second QoS flow may be established. Specifically, the following steps are included.

Step 306: The session management function network element sends an accounting request message to the AAA server, to request to start accounting for the second QoS flow in the PDU session.

The accounting request message may have another name, which may be, for example, a third message. Content carried in the accounting request message is not limited in this embodiment of this application, and may include but is not limited to the identifier of the terminal device, the address of the terminal device, an identifier (denoted as an accounting session identifier 2 below) of the second accounting session corresponding to the second QoS flow, the first charging identifier, a QFI (denoted as a second QFI) of the second QoS flow, the radio access type (where the radio access type in the 5GS is NG-RAN), a filter on the second QoS flow, and a QoS profile corresponding to the second QoS flow.

The accounting session identifier 2 may include the following information: the first charging identifier, the address of the session management function network element, and identification information of the second QoS flow. The identification information of the second QoS flow may be the second QFI of the second QoS flow or other information that is allocated by the session management function network element and that identifies the second QoS flow.

Step 307: The AAA server returns a corresponding response message.

Similarly, when the session management function network element determines to create the third QoS flow and the fourth QoS flow in the PDU session, the foregoing method may also be used to establish an identifier of a third accounting session corresponding to the third QoS flow and an identifier of a fourth accounting session corresponding to the fourth QoS flow. A specific process is not described.

The identifier of the third accounting session may include the following information: the first charging identifier, the address of the session management function network element, and identification information of the third QoS flow. The identification information of the third QoS flow may be a third QFI of the third QoS flow or other information that is allocated by the session management function network element and that identifies the third QoS flow. The identifier of the fourth accounting session may include the following information: the first charging identifier, the address of the session management function network element, and identification information of the fourth QoS flow. The identification information of the fourth QoS flow may be a fourth QFI of the fourth QoS flow or other information that is allocated by the session management function network element and that identifies the fourth QoS flow.

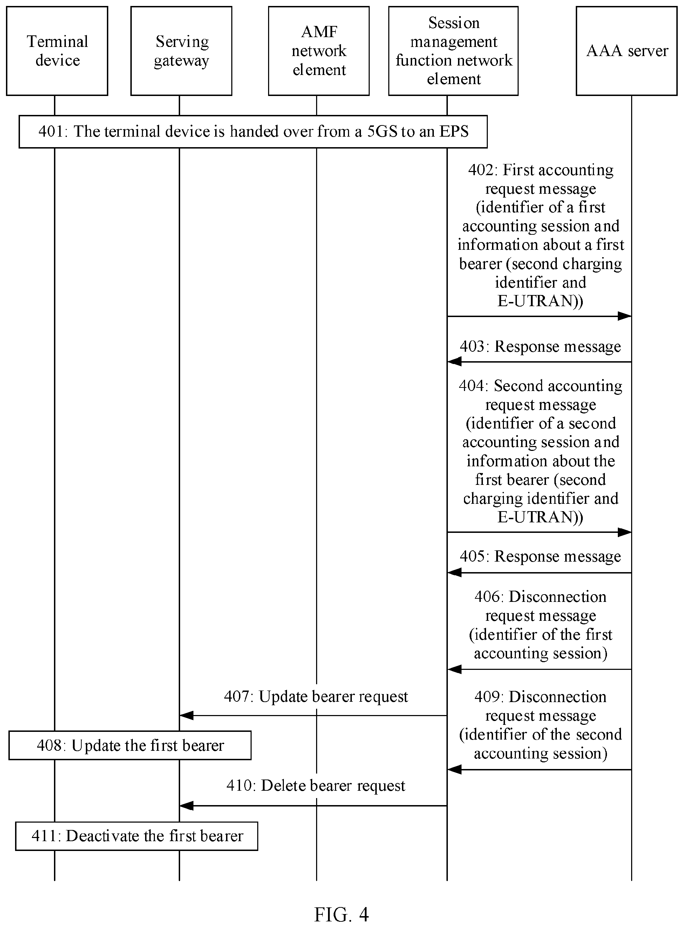

With reference to the foregoing procedure, when a terminal device is handed over from a first network to a second network, a session management function network element may update, based on a bearer corresponding to each QoS flow, an accounting session corresponding to the QoS flow. If a plurality of QoS flows are mapped to a same bearer, the session management function network element updates information corresponding to the bearer for each accounting session. Details are described below with reference to FIG. 4.

Step 401: The terminal device is handed over from a 5GS to an EPS.

A specific process of handover of the terminal device to the EPS is not described in this embodiment of this application. For details, refer to the descriptions in the existing technology.

After the terminal device is handed over from the 5GS to the EPS, when the session management function network element determines to map a first QoS flow and a second QoS flow in a PDU session to a first bearer, the following steps may be performed.

It should be noted that a specific manner in which the session management function network element determines to map the first QoS flow and the second QoS flow to the first bearer is not limited in this embodiment of this application.

Step 402: The session management function network element sends a first accounting request message to an AAA server.

The first accounting request message may be the second message in the procedure in FIG. 2. The first accounting request message includes an identifier of a first accounting session corresponding to the first QoS flow and information about the first bearer, the information about the first bearer is used to update the first accounting session, and the first accounting request message indicates the AAA server to update the first accounting session corresponding to the first QoS flow.

The information about the first bearer includes at least one of the following:
a radio access type corresponding to the first bearer, where for example, in the EPS, the radio access type of the first bearer may be an evolved universal terrestrial radio access network (evolved universal terrestrial radio access network, E-UTRAN); a packet filter corresponding to the first bearer; and a QoS profile corresponding to the first bearer.

Optionally, when the session management function network element allocates a second charging identifier to the first bearer, information about the first bearer further includes the second charging identifier.

Step 403: The AAA server updates the first accounting session, and returns a response message.

For example, the AAA server may update the first accounting identifier in the first accounting session to the second accounting identifier, to update the first accounting session.

Step 404: The session management function network element sends a second accounting request message to the AAA server.

The second accounting request message may have another name, which may be, for example, a fourth message. The second accounting request message includes an identifier of a second accounting session corresponding to the second QoS flow and the information about the first bearer, the information about the first bearer is used to update the second accounting session, and the second accounting request message indicates the AAA server to update the second accounting session corresponding to the second QoS flow.

For the information about the first bearer, refer to the foregoing descriptions. Details are not described herein again.

Optionally, when the session management network element allocates the second charging identifier to the first bearer, the information about the first bearer further includes the second charging identifier.

Step 405: The AAA server updates the second accounting session, and returns a response message.

For example, the AAA server may update the first accounting identifier in the second accounting session to the second accounting identifier, to update the second accounting session.

It should be noted that, after updating the second accounting session by performing step 403 and step 405, the AAA server performs accounting based on the first bearer. To be specific, accounting is performed only based on the first bearer for the two QoS flows, and accounting is not performed based on the QoS flow. Although the first QoS flow and the second QoS flow are mapped to the first bearer, the session management function network element still maintains a packet filter corresponding to each QoS flow.

Optionally, when the AAA server determines to delete a resource corresponding to the first QoS flow, the following steps may be further included.

Step 406: The AAA server sends a disconnection request message to the session management function network element, where the disconnection request message includes the identifier of the first accounting session, and the disconnection request message requests to delete the resource corresponding to the first QoS flow.

Step 407: The session management function network element sends an update bearer request to a serving gateway, where the update bearer request requests to delete the resource corresponding to the first QoS flow, and the update bearer request may include an identifier of the first bearer.

After receiving the update bearer request, the serving gateway may delete, from the packet filter of the first bearer, a resource such as the packet filter corresponding to the first QoS flow.

Step 408: The network side interacts with the terminal device to complete a first bearer update procedure. A specific process is not described.

Optionally, when the AAA server determines to delete a resource corresponding to the second QoS flow, the following steps may be further included.

Step 409: The AAA server sends a disconnection request message to the session management function network element, where the disconnection request message includes the identifier of the second accounting session, and the disconnection request message requests to delete the resource corresponding to the second QoS flow.

The session management function network element determines that the first bearer does not have a corresponding QoS flow after the second QoS flow corresponding to the first bearer is deleted. In this case, the following steps may be performed.

Step 410: The session management function network element sends a delete bearer request to the serving gateway, where the delete bearer request requests to delete the resource corresponding to the second QoS flow, and the delete bearer request may include the identifier of the first bearer.

After receiving the delete bearer request, the serving gateway may delete, from the packet filter of the first bearer, a resource such as the packet filter corresponding to the second QoS flow.

Step 411: The network side interacts with the terminal device to complete a procedure of deleting the first bearer, that is, complete a procedure of deactivating (deactive) the first bearer. A specific process is not described.

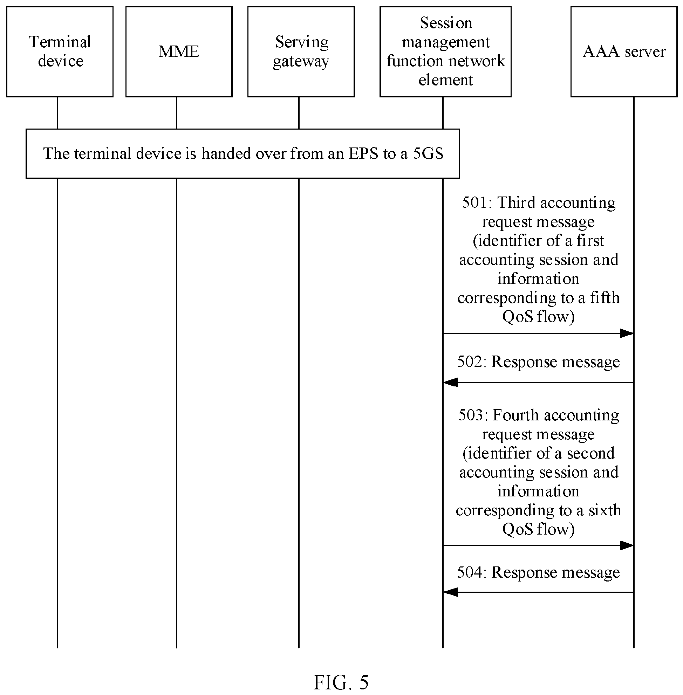

Based on the procedure in step 401 to step 405 in FIG. 4, if the terminal device is subsequently handed over from the EPS to the 5GS, the session management function network element determines to map the first bearer to a fifth QoS flow and a sixth QoS flow. Specific steps are shown in FIG. 5.

Step 501: The session management function network element determines to map the first bearer to the corresponding fifth QoS flow in the first network, and sends a third accounting request message to the AAA server.

It should be noted that a specific manner in which the session management function network element determines to map the first bearer to the fifth QoS flow is not limited in this embodiment of this application.

The third accounting request message includes the identifier of the first accounting session and information corresponding to the fifth QoS flow, and the third accounting request message indicates the AAA server to update the first accounting session. The information corresponding to the first QoS flow may be used to update the first accounting session.

The information corresponding to the fifth QoS flow includes one or more of the following:
a radio access type corresponding to the fifth QoS flow, a packet filter corresponding to the fifth QoS flow, and a QoS profile corresponding to the fifth QoS flow.

If the session management function network element allocates the second charging identifier to the first bearer in step 402, the information corresponding to the fifth QoS flow further includes the first charging identifier.

Step 502: The AAA server updates the first accounting session, and returns a corresponding response message.

Step 503: The session management function network element determines to map the first bearer to the corresponding sixth QoS flow in the first network, and sends a fourth accounting request message to the AAA server.

The fourth accounting request message includes the identifier of the second accounting session and information corresponding to the sixth QoS flow, and the fourth accounting request message indicates the AAA server to update the second accounting session.

The information corresponding to the sixth QoS flow includes one or more of the following:
a radio access type corresponding to the sixth QoS flow, a packet filter corresponding to the sixth QoS flow, and a QoS profile corresponding to the sixth QoS flow.

If the session management function network element allocates the second charging identifier to the first bearer in step 404, the information corresponding to the sixth QoS flow further includes the first charging identifier.

Step 504: The AAA server updates the second accounting session, and returns a corresponding response message.

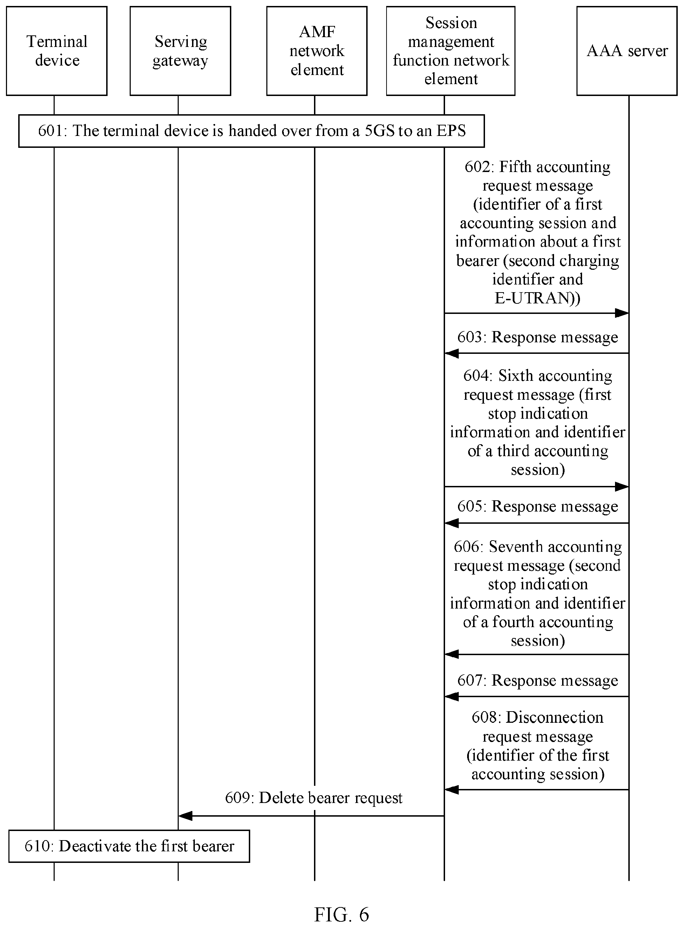

In an embodiment of this application, when a terminal device is handed over from a first network to a second network, a session management function network element may update, based on a bearer corresponding to each QoS flow, an accounting session corresponding to the QoS flow. If a plurality of QoS flows are mapped to a same bearer, the session management function network element may further update one accounting session, and stop other accounting sessions. Details are described below with reference to FIG. 6.

Step 601: The terminal device is handed over from a 5GS to an EPS.

A specific process of handover of the terminal device to the EPS is not described in this embodiment of this application. For details, refer to the descriptions in the existing technology.

After the terminal device is handed over from the 5GS to the EPS, when the session management function network element determines to map a first QoS flow and a third QoS flow in a PDU session to a first bearer, the following steps may be performed.

It should be noted that a specific manner in which the session management function network element determines to map the first QoS flow and the third QoS flow to the first bearer is not limited in this embodiment of this application.

Step 602: The session management function network element sends a fifth accounting request message to an AAA server.

The fifth accounting request message may be the second message in the procedure in FIG. 2. The fifth accounting request message includes an identifier of a first accounting session corresponding to the first QoS flow and information about the first bearer, the information about the first bearer is used to update the first accounting session, and the fifth accounting request message indicates the AAA server to update the first accounting session corresponding to the first QoS flow. For specific content of the information about the first bearer, refer to the foregoing descriptions.

Optionally, the fifth accounting request message may further include a packet filter obtained by aggregating a packet filter of the first QoS flow and a packet filter of the third QoS flow.

Step 603: The AAA server updates the first accounting session, and returns a response message.

After the first QoS flow and the third QoS flow in the PDU session are mapped to the first bearer, a third accounting session corresponding to the third QoS flow may be terminated.

Step 604: The session management function network element sends a sixth accounting request message to the AAA server.

The sixth accounting request message includes first stop indication information and an identifier of the third accounting session corresponding to the third QoS flow, and the first stop indication information indicates the AAA server to terminate the third accounting session.

Step 605: The AAA server deletes information corresponding to the third accounting session, and returns a response message.

It should be noted that, after the AAA server terminates the third accounting session in step 503 and step 505, service access control, for example, access control, charging, and service provisioning, is performed based on information about the first accounting session for a service transmitted by the user by using the first bearer.

Optionally, if the PDU session further includes a fourth QoS flow, when establishing the fourth QoS flow, the session management function network element may send, to the AAA server by using a fifth message, an identifier of a fourth accounting session corresponding to the fourth QoS flow. After the terminal device is handed over to the EPS, if determining that the fourth QoS flow is not mapped to any bearer in the EPS network, the session management function network element may indicate the AAA server to delete the identifier of the fourth accounting session corresponding to the fourth QoS flow. This may specifically include the following steps.

Step 606: The session management function network element determines that the fourth QoS flow is not mapped to a bearer in the second network, and sends a seventh accounting request message to the AAA server, where the seventh accounting request message includes second stop indication information and the identifier of the fourth accounting session corresponding to the fourth QoS flow, and the second stop indication information indicates the AAA server to terminate the fourth accounting session.

Step 607: The AAA server deletes information corresponding to the fourth accounting session, and returns a response message.

Optionally, when the AAA server determines to delete resources corresponding to the first QoS flow and the third QoS flow, the following steps may be further included.

Step 608: The AAA server sends a disconnection request message to the session management function network element, where the disconnection request message includes the identifier of the first accounting session, and the disconnection request message requests to delete a resource corresponding to the first bearer (to be specific, the original first QoS flow and third QoS flow).

Step 609: The session management function network element sends a delete bearer request to a serving gateway, where the delete bearer request requests to delete the resources corresponding to the first QoS flow and third QoS flow, and the delete bearer request may include an identifier of the first bearer.

After receiving the delete bearer request, the serving gateway may delete, from the packet filter of the first bearer, resources such as packet filters corresponding to the first QoS flow and third QoS flow.

Step 610: A network side interacts with the terminal device to complete a procedure of deactivating the first bearer. A specific process is not described.

The foregoing procedure describes handover of the terminal device from the 5GS to the EPS. This embodiment of this application may also be applied to a process in which the terminal device is handed over from the EPS to the 5GS. This is described in detail below.

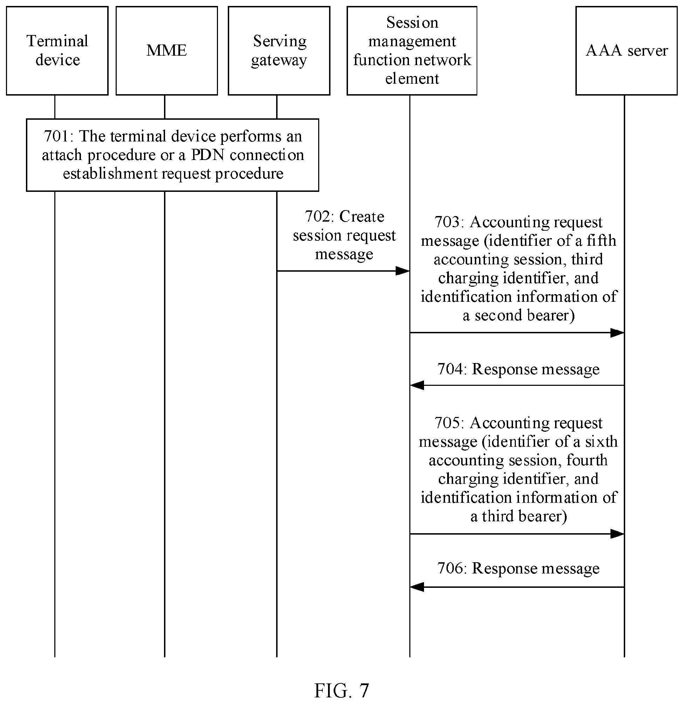

As shown in FIG. 7, when accessing a terminal device via an EPS, an accounting session corresponding to each bearer may be established, and the accounting session is uniquely identified by using an identifier of the accounting session. The procedure in FIG. 7 may include network elements such as a mobility management entity (mobility management entity, MME), a serving gateway, a session management function network element, and an AAA server.

Step 701: The terminal device performs an attach procedure or a PDN connection establishment request procedure.

Step 702: The serving gateway sends a create session request message to the session management function network element.

The create session request message may include an identifier of a second bearer in a PDN connection.

Further, a network side further needs to perform a process such as authentication and authorization on the terminal device, and the specific process is not described. For details, refer to the descriptions in the existing technology.

It is assumed that in the procedure shown in FIG. 7, the PDN connection includes the second bearer and a third QoS bearer. How to establish an accounting session corresponding to each bearer is separately described below.

For the second bearer, an accounting session corresponding to the second bearer may be established by performing the following steps.

Step 703: The session management function network element sends an accounting request message to the AAA server, to request to start accounting for the second bearer in the PDN connection.

Content carried in the accounting request message is not limited in this embodiment of this application, and may include but is not limited to an identifier of the terminal device (or referred to as a user), an address of the terminal device, an identifier of a fifth accounting session corresponding to the second bearer, a third charging identifier (an identifier allocated by the session management function network element to the PDN connection), identification information of the second bearer (for example, bearer identifier (bearer ID) of the second bearer), a radio access type of the second bearer, and a QoS profile corresponding to the second bearer.

The identifier of the fifth accounting session may include the following information: the third charging identifier, an address of the session management function network element, and the identification information of the second bearer. The identification information of the second bearer may be the bearer identifier of the second bearer or other information that is allocated by the session management function network element and that identifies the second bearer.

Step 704: The AAA server returns a corresponding response message.

Optionally, when the session management function network element determines to create a new third bearer in the PDN connection, the session management function network element may initiate a third bearer setup procedure. A specific process is not described. After the third bearer is established in the PDN connection, an accounting session corresponding to the third bearer may be established. Specifically, the following steps are included.

Step 705: The session management function network element sends an accounting request message to the AAA server, to request to start accounting for the third bearer in the PDN connection.

Content carried in the accounting request message is not limited in this embodiment of this application, and may include but is not limited to the identifier of the terminal device (or referred to as the user), the address of the terminal device, an identifier of a sixth accounting session corresponding to the third bearer, the third charging identifier, identification information of the third bearer, a radio the access type, and a QoS profile corresponding to the third bearer.

The identifier of the sixth accounting session may include the following information: the third charging identifier or a fourth charging identifier, the address of the session management function network element, and the identification information of the third bearer. The identification information of the third bearer may be a bearer identifier of the third bearer or other information that is allocated by the session management function network element and that identifies the third bearer. The fourth charging identifier is a charging identifier allocated by the session management function network element to the third bearer.

Step 706: The AAA server returns a corresponding response message.

Optionally, when the session management function network element determines to modify or delete the second bearer, the session management function network element may separately send a message of a corresponding function to the serving gateway, where the message carries the identifier of the second bearer. For example, when determining to modify the second bearer, the session management function network element sends a modify bearer request (modify bearer request) message. When determining to delete the second bearer, the session management function network element sends a delete bearer request (delete bearer request). A specific process is not described.

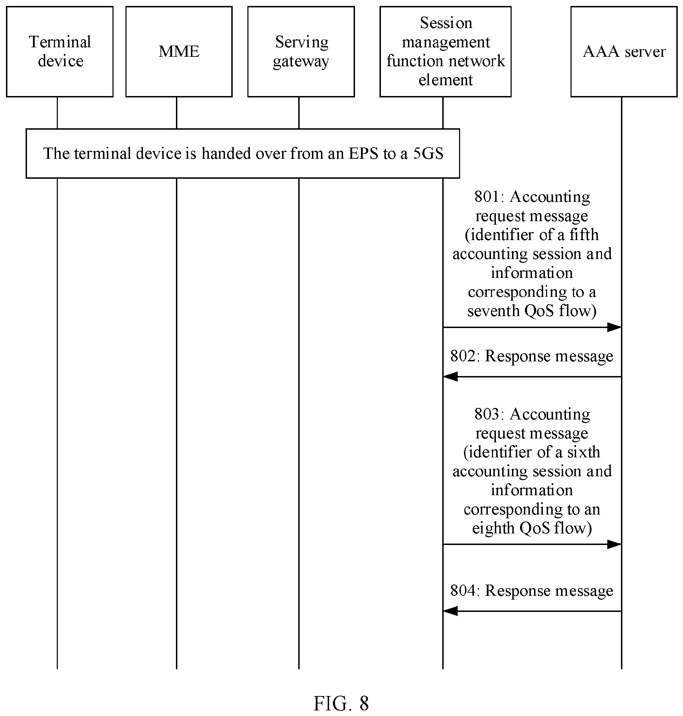

Further, after the PDN connection is established, and after the terminal device is handed over from the second network to the first network, the session management function network element may update a corresponding accounting session based on each bearer. For details, refer to FIG. 8. FIG. 8 is a schematic flowchart of a communication method according to an embodiment of this application.

Step 801: The session management function network element determines to map a second bearer to a corresponding seventh QoS flow in the first network, and sends an accounting request message to an AAA server.

It should be noted that a specific manner in which the session management function network element determines to map the second bearer to the seventh QoS flow is not limited in this embodiment of this application.

The accounting request message includes an identifier of a fifth accounting session and information corresponding to the seventh QoS flow, and the accounting request message indicates the AAA server to update the fifth accounting session. The information corresponding to the seventh QoS flow may be used to update the fifth accounting session.

The information corresponding to the seventh QoS flow includes one or more of the following:
a radio access type corresponding to the seventh QoS flow, a packet filter corresponding to the seventh QoS flow, and a QoS profile corresponding to the seventh QoS flow.

The information corresponding to the seventh QoS flow may further include a third charging identifier.

Step 802: The AAA server returns a corresponding response message.

Optionally, the following steps may be further included.

Step 803: The session management function network element determines to map the third bearer to a corresponding eighth QoS flow in the first network, and sends an accounting request message to the AAA server.

The accounting request message includes an identifier of a sixth accounting session and information corresponding to the eighth QoS flow, and the accounting request message indicates the AAA server to update the sixth accounting session.

The information corresponding to the eighth QoS flow includes one or more of the following:
a radio access type corresponding to the eighth QoS flow, a packet filter corresponding to the eighth QoS flow, and a QoS profile corresponding to the eighth QoS flow.

Step 804: The AAA server updates the sixth accounting session, and returns a corresponding response message.

In FIG. 8, if the session management function network element allocates a fourth charging identifier to the third bearer, the accounting request message further includes the third charging identifier.

Optionally, if the AAA server determines to delete a resource corresponding to the seventh QoS flow, the AAA server may send a disconnection request message to the session management function network element, where the disconnection request message carries the identifier of the fifth accounting session. The session management function network element may delete, based on the disconnection request message, the resource corresponding to the seventh QoS flow. A specific process is not described.

It should be noted that the embodiments provided in embodiments of this application may be independent solutions, or may be combined based on internal logic. All these solutions fall within the protection scope of this application.

In the foregoing embodiments provided in this application, the methods provided in embodiments of this application are separately described from a perspective of interaction between devices. To implement the functions in the methods provided in embodiments of this application, the session management function network element may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. During actual implementation, another division manner may be used. In addition, function modules in embodiments of this application may be integrated into one processor, or may exist alone physically, or two or more modules may be integrated into one module. The integrated module may be implemented in a form of hardware, or may be implemented in a form of a software function module.

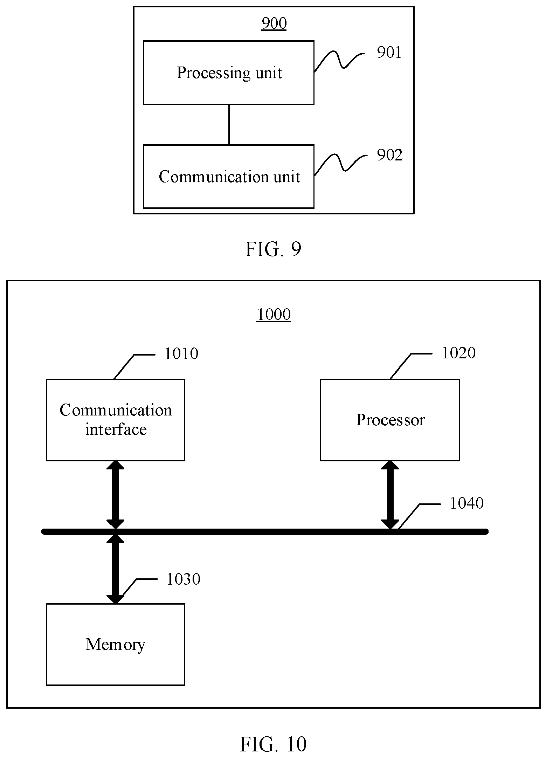

Same as the foregoing concept, as shown in FIG. 9, an embodiment of this application further provides an apparatus 900, configured to implement functions of the session management function network element in the foregoing method. For example, the apparatus may be a software module or a chip system. In this embodiment of this application, the chip system may include a chip, or may include the chip and another discrete component. The apparatus 900 may include a processing unit 901 and a communication unit 902.

In this embodiment of this application, the communication unit may also be referred to as a transceiver unit, and may include a sending unit and/or a receiving unit, which are respectively configured to perform the steps of sending and receiving by the session management function network element in the foregoing method embodiments.

Communication apparatus provided in embodiments of this application is described in detail with reference to FIG. 9 and FIG. 10. It should be understood that descriptions of apparatus embodiments are corresponding to the descriptions of the method embodiments. Therefore, for content that is not described in detail, refer to the foregoing method embodiments. For brevity, details are not described herein again.

The communication unit 902 may also be referred to as a transceiver, a transceiver machine, a transceiver apparatus, or the like. The processing unit 901 may also be referred to as a processor, a processing board, a processing module, a processing apparatus, or the like. Optionally, a component that is in the communication unit 902 and that is configured to implement the receiving function may be considered as a receiving unit, and a component that is in the communication unit 902 and that is configured to implement the sending function may be considered as a sending unit. That is, the communication unit 902 includes the receiving unit and the sending unit. The communication unit 902 sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

The processing unit is configured to establish a protocol data unit session in a first network for a terminal device, where the protocol data unit session includes a first quality of service flow.

The communication unit is configured to send a first message to an authentication, authorization, and accounting server, where the first message includes an identifier of a first accounting session corresponding to the first quality of service flow.

The processing unit is configured to map the first quality of service flow to a corresponding first bearer in a second network after determining that the terminal device is handed over from the first network to the second network.

The communication unit is configured to send a second message to the authentication, authorization, and accounting server.

The second message includes the identifier of the first accounting session corresponding to the first quality of service flow and information about the first bearer, and the second message indicates the authentication, authorization, and accounting server to update the first accounting session.

It should be understood that the communication unit and the processing unit may further perform other operations. For example, the communication unit 902 is configured to perform a sending operation and a receiving operation of the session management function network element in the method embodiment shown in FIG. 4, FIG. 8, or FIG. 10. The processing unit 901 is configured to perform the other operations of the session management function network element in the method embodiment shown in FIG. 4, FIG. 8, or FIG. 10. For details, refer to the foregoing descriptions. Details are not described herein again.

FIG. 10 shows another communication apparatus according to an embodiment of this application. The apparatus shown in FIG. 10 may be an implementation of a hardware circuit of the apparatus shown in FIG. 9. The communication apparatus is applicable to the foregoing flowcharts, and performs functions of the session management function network element in the foregoing method embodiments. For ease of description, FIG. 10 shows only main components of the communication apparatus.

The apparatus 1000 may further include at least one memory 1030, configured to store program instructions and/or data. The memory 1030 is coupled to a processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. At least one of the at least one memory may be included in the processor.

The apparatus 1000 shown in FIG. 10 includes at least one processor 1020 and a communication interface 1010. The processor 1020 is configured to execute instructions or a program stored in the memory 1030. When the instructions or the program stored in the memory 1030 is executed, the processor 1020 is configured to perform an operation performed by the processing unit 901 in the foregoing embodiment, and the communication interface 1010 is configured to perform an operation performed by the communication unit 902 in the foregoing embodiment.

In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver or a communication interface integrated with sending and receiving functions.

The apparatus 1000 may further include a communication line 1040. The communication interface 1010, the processor 1020, and the memory 1030 may be connected to each other through the communication line 1040. The communication line 1040 may be a peripheral component interconnect (peripheral component interconnect, PCI) bus, an extended industry standard architecture (extended industry standard architecture, EISA) bus, or the like. The communication line 1040 may be classified into an address bus, a data bus, a control bus, and the like. For ease of representation, only one bold line is for representing the bus in FIG. 10, but this does not mean that there is only one bus or only one type of bus.

This application further provides a computer-readable storage medium, configured to store a computer program. The computer program includes instructions used to perform the method provided in any one of the foregoing procedures.

This application further provides a computer program product. The computer program product includes computer program code. When the computer program code is run on a computer, the computer is enabled to perform the method provided in any one of the foregoing procedures.

This application further provides a chip, including a processor. The processor is coupled to a memory, and is configured to execute a computer program or instructions stored in the memory. When the processor executes the computer program or the instructions, the method provided in any one of the foregoing procedures is implemented.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
establishing (201), by a session management function network element, a protocol data unit session in a first network for a terminal device, wherein the protocol data unit session comprises a first quality of service flow;
sending (202), by the session management function network element, a first message to an authentication, authorization, and accounting server, wherein the first message comprises an identifier of a first accounting session corresponding to the first quality of service flow, wherein the identifier of the first accounting session is an accounting session identifier, acct-session-ID, or a session identifier, session-ID;
determining that the terminal device is handed over from the first network to the second network;
mapping (203), by the session management function network element, the first quality of service flow to a corresponding first bearer in a second network, wherein the first and second network respectively comprises a 5th generation system, 5GS, and an evolved packet system, EPS; and
sending (204), by the session management function network element, a second message to the authentication, authorization, and accounting server, wherein
the second message comprises the identifier of the first accounting session corresponding to the first quality of service flow and the second message further comprises at least one of a radio access type corresponding to the first bearer, and a quality of service profile corresponding to the first bearer, and the second message indicates the authentication, authorization, and accounting server to update the first accounting session.

2. The method according to claim 1, wherein the protocol data unit session further comprises a second quality of service flow, and the method further comprises:
sending (306), by the session management function network element, a third message to the authentication, authorization, and accounting server, wherein the third message comprises an identifier of a second accounting session corresponding to the second quality of service flow, wherein the identifier of the second accounting session is an accounting session identifier, acct-session-ID, or a session identifier, session-ID;
mapping, by the session management function network element, the second quality of service flow to the first bearer; and
sending, by the session management function network element, a fourth message to the authentication, authorization, and accounting server, wherein the fourth message comprises the identifier of the second accounting session corresponding to the second quality of service flow and the information about the first bearer, and the fourth message indicates the authentication, authorization, and accounting server to update the second accounting session.

3. The method according to any one of claims 1 and 2, wherein the method further comprises:
receiving (406), by the session management function network element, a disconnection request message from the authentication, authorization, and accounting server, wherein the disconnection request message comprises the identifier of the first accounting session, and the disconnection request message requests to delete a resource corresponding to the first quality of service flow; and
sending (407), by the session management function network element, an update bearer request to a serving gateway, wherein the update bearer request requests to delete the resource corresponding to the first quality of service flow.

4. The method according to claim 1, wherein the protocol data unit session further comprises a third quality of service flow, and the method further comprises:
mapping, by the session management function network element, the third quality of service flow of the terminal device to the first bearer; and
sending (604), by the session management function network element to the authentication, authorization, and accounting server, first stop indication information and an identifier of a third accounting session corresponding to the third quality of service flow, wherein the first stop indication information indicates the authentication, authorization, and accounting server to terminate the third accounting session.

5. The method according to any one of claims 1 to 4, wherein the protocol data unit session further comprises a fourth quality of service flow, and the method further comprises:
sending, by the session management function network element, a fifth message to the authentication, authorization, and accounting server, wherein the fifth message comprises an identifier of a fourth accounting session corresponding to the fourth quality of service flow;
after determining that the terminal device is handed over from the first network to the second network, determining, by the session management function network element, that the fourth quality of service flow is not mapped to a bearer in the second network; and
sending (606), by the session management function network element to the authentication, authorization, and accounting server, second stop indication information and the identifier of the fourth accounting session corresponding to the fourth quality of service flow, wherein the second stop indication information indicates the authentication, authorization, and accounting server to terminate the fourth accounting session.

6. The method according to any one of claims 1 to 5, wherein, when the identifier of the first accounting session is the acct-session-ID, the identifier of the first accounting session comprises a first charging identifier, an address of the session management function network element, and identification information of the first quality of service flow, and the first charging identifier is a charging identifier allocated by the session management function network element to the protocol data unit session.

7. The method according to any one of claims 2, 3, 5 or 6, when depending on claim 2, wherein, when the identifier of the second accounting session is the acct-session-ID, the identifier of the second accounting session comprises a first charging identifier, an address of the session management function network element, and identification information of the second quality of service flow.

8. The method according to any one of claims 1 to 7, wherein the information about the first bearer further comprises a second charging identifier allocated by the session management function network element to the first bearer.

9. The method according to any one of claims 1 to 8, wherein the method further comprises:
mapping (501), by the session management function network element, the first bearer to a corresponding fifth quality of service flow in the first network after determining that the terminal device is handed over from the second network to the first network; and
sending (501), by the session management function network element, a sixth message to the authentication, authorization, and accounting server, wherein
the sixth message comprises the identifier of the first accounting session and information corresponding to the fifth quality of service flow, and the sixth message indicates the authentication, authorization, and accounting server to update the first accounting session.

10. The method according to claim 9, wherein the information corresponding to the fifth quality of service flow comprises one or more of the following:
a radio access type corresponding to the fifth quality of service flow, and a quality of service profile corresponding to the fifth quality of service flow.

11. The method according to claim 9, wherein the information corresponding to the fifth quality of service flow further comprises the first charging identifier.

12. The method according to claim 9, 10, or 11, wherein the method further comprises:
mapping (503), by the session management function network element, the first bearer to a corresponding sixth quality of service flow in the first network after determining that the terminal device is handed over from the second network to the first network; and
sending (503), by the session management function network element, a seventh message to the authentication, authorization, and accounting server, wherein
the seventh message comprises the identifier of the second accounting session and information corresponding to the sixth quality of service flow, and the seventh message indicates the authentication, authorization, and accounting server to update the second accounting session.

13. A communication apparatus (1000), comprising a memory and a processor, wherein the memory is configured to store instructions, the processor is configured to execute the instructions stored in the memory, and execution of the instructions stored in the memory enables the processor to perform the method according to any one of claims 1 to 12.

14. A computer program product, comprising computer-readable instructions, wherein when a communication apparatus reads and executes the computer-readable instructions, the communication apparatus is enabled to perform the method according to any one of claims 1 to 12.

15. A computer readable storage medium, comprising computer-readable instructions, wherein when a communication apparatus reads and executes the computer-readable instructions, the communication apparatus is enabled to perform the method according to any one of claims 1 to 12.

## Patentansprüche

1. Kommunikationsverfahren, umfassend:
Einrichten (201), durch ein Sitzungsverwaltungsfunktion-Netzwerkelement, einer Protokolldateneinheitssitzung in einem ersten Netzwerk für ein Endgerät, wobei die Protokolldateneinheitssitzung einen ersten Dienstgütefluss umfasst;
Senden (202), durch das Sitzungsverwaltungsfunktion-Netzwerkelement, einer ersten Nachricht an einen Authentifizierungs-, Autorisierungs- und Abrechnungsserver, wobei die erste Nachricht eine Kennung einer ersten Abrechnungssitzung korrespondierend mit dem ersten Dienstgütefluss umfasst, wobei die Kennung der ersten Abrechnungssitzung eine Abrechnungssitzungskennung, acct-session-ID, oder eine Sitzungskennung, session-ID, ist;
Bestimmen, dass das Endgerät von dem ersten Netzwerk an das zweite Netzwerk übergeben wird;
Abbilden (203), durch das Sitzungsverwaltungsfunktion-Netzwerkelement, des ersten Dienstgüteflusses auf einen korrespondierenden ersten Träger in einem zweiten Netzwerk, wobei das erste bzw. das zweite Netzwerk ein System der 5. Generation, 5GS, und ein entwickeltes Paketsystem, EPS, umfasst; und
Senden (204), durch das Sitzungsverwaltungsfunktion-Netzwerkelement, einer zweiten Nachricht an den Authentifizierungs-, Autorisierungs- und Abrechnungsserver, wobei
die zweite Nachricht die Kennung der ersten Abrechnungssitzung korrespondierend mit dem ersten Dienstgütefluss umfasst und die zweite Nachricht ferner mindestens eines eines Funkzugangstyps korrespondierend mit dem ersten Träger und eines Dienstgüteprofils korrespondierend mit dem ersten Träger umfasst und die zweite Nachricht dem Authentifizierungs-, Autorisierungs- und Abrechnungsserver angibt, die erste Abrechnungssitzung zu aktualisieren.

2. Verfahren nach Anspruch 1, wobei die Protokolldateneinheitssitzung ferner einen zweiten Dienstgütefluss umfasst und das Verfahren ferner Folgendes umfasst:
Senden (306), durch das Sitzungsverwaltungsfunktion-Netzwerkelement, einer dritten Nachricht an den Authentifizierungs-, Autorisierungs- und Abrechnungsserver, wobei die dritte Nachricht eine Kennung einer zweiten Abrechnungssitzung korrespondierend mit dem zweiten Dienstgütefluss umfasst, wobei die Kennung der zweiten Abrechnungssitzung eine Abrechnungssitzungskennung, acct-session-ID, oder eine Sitzungskennung, session-ID, ist;
Abbilden, durch das Sitzungsverwaltungsfunktion-Netzwerkelement, des zweiten Dienstgüteflusses auf den ersten Träger; und
Senden, durch das Sitzungsverwaltungsfunktion-Netzwerkelement, einer vierten Nachricht an den Authentifizierungs-, Autorisierungs- und Abrechnungsserver, wobei die vierte Nachricht die Kennung der zweiten Abrechnungssitzung korrespondierend mit dem zweiten Dienstgütefluss und die Informationen über den ersten Träger umfasst und die vierte Nachricht dem Authentifizierungs-, Autorisierungs- und Abrechnungsserver angibt, die zweite Abrechnungssitzung zu aktualisieren.

3. Verfahren nach einem der Ansprüche 1 und 2, wobei das Verfahren ferner Folgendes umfasst:
Empfangen (406), durch das Sitzungsverwaltungsfunktion-Netzwerkelement, einer Trennungsanforderungsnachricht von dem Authentifizierungs-, Autorisierungs- und Abrechnungsserver, wobei die Trennungsanforderungsnachricht die Kennung der ersten Abrechnungssitzung umfasst und die Trennungsanforderungsnachricht anfordert, ein Betriebsmittel korrespondierend mit dem ersten Dienstgütefluss zu löschen; und
Senden (407), durch das Sitzungsverwaltungsfunktion-Netzwerkelement, einer Trägeraktualisierungsanforderung an ein bedienendes Gateway, wobei die Trägeraktualisierungsanforderung anfordert, das Betriebsmittel korrespondierend mit dem ersten Dienstgütefluss zu löschen.

4. Verfahren nach Anspruch 1, wobei die Protokolldateneinheitssitzung ferner einen dritten Dienstgütefluss umfasst und das Verfahren ferner Folgendes umfasst:
Abbilden, durch das Sitzungsverwaltungsfunktion-Netzwerkelement, des dritten Dienstgüteflusses des Endgeräts auf den ersten Träger; und
Senden (604), durch das Sitzungsverwaltungsfunktion-Netzwerkelement an den Authentifizierungs-, Autorisierungs- und Abrechnungsserver, erster Stoppangabeinformationen und einer Kennung einer dritten Abrechnungssitzung korrespondierend mit dem dritten Dienstgütefluss, wobei die ersten Stoppangabeinformationen dem Authentifizierungs-, Autorisierungs- und Abrechnungsserver angeben, die dritte Abrechnungssitzung zu beenden.

5. Verfahren nach einem der Ansprüche 1 bis 4, wobei die Protokolldateneinheitssitzung ferner einen vierten Dienstgütefluss umfasst und das Verfahren ferner Folgendes umfasst:
Senden, durch das Sitzungsverwaltungsfunktion-Netzwerkelement, einer fünften Nachricht an den Authentifizierungs-, Autorisierungs- und Abrechnungsserver, wobei die fünfte Nachricht eine Kennung einer vierten Abrechnungssitzung korrespondierend mit dem vierten Dienstgütefluss umfasst;
nach dem Bestimmen, dass das Endgerät von dem ersten Netzwerk an das zweite Netzwerk übergeben wird, Bestimmen, durch das Sitzungsverwaltungsfunktion-Netzwerkelement, dass der vierte Dienstgütefluss nicht auf einen Träger in dem zweiten Netzwerk abgebildet ist; und
Senden (606), durch das Sitzungsverwaltungsfunktion-Netzwerkelement an den Authentifizierungs-, Autorisierungs- und Abrechnungsserver, zweiter Stoppangabeinformationen und der Kennung der vierten Abrechnungssitzung korrespondierend mit dem vierten Dienstgütefluss, wobei die zweiten Stoppangabeinformationen dem Authentifizierungs-, Autorisierungs- und Abrechnungsserver angeben, die vierte Abrechnungssitzung zu beenden.

6. Verfahren nach einem der Ansprüche 1 bis 5, wobei, wenn die Kennung der ersten Abrechnungssitzung die acct-session-ID ist, die Kennung der ersten Abrechnungssitzung eine erste Inrechnungsstellungskennung, eine Adresse des Sitzungsverwaltungsfunktion-Netzwerkelements und Identifizierungsinformationen des ersten Dienstgüteflusses umfasst und die erste Inrechnungsstellungskennung eine Inrechnungsstellungskennung ist, die durch das Sitzungsverwaltungsfunktion-Netzwerkelement der Protokolldateneinheitssitzung zugeteilt wurde.

7. Verfahren nach einem der Ansprüche 2, 3, 5 oder 6, wenn von Anspruch 2 abhängig, wobei, wenn die Kennung der zweiten Abrechnungssitzung die acct-session-ID ist, die Kennung der zweiten Abrechnungssitzung eine erste Inrechnungsstellungskennung, eine Adresse des Sitzungsverwaltungsfunktion-Netzwerkelements und Identifizierungsinformationen des zweiten Dienstgüteflusses umfasst.

8. Verfahren nach einem der Ansprüche 1 bis 7, wobei die Informationen über den ersten Träger ferner eine zweite Inrechnungsstellungskennung umfassen, die durch das Sitzungsverwaltungsfunktion-Netzwerkelement dem ersten Träger zugeteilt wurde.

9. Verfahren nach einem der Ansprüche 1 bis 8, wobei das Verfahren ferner Folgendes umfasst:
Abbilden (501), durch das Sitzungsverwaltungsfunktion-Netzwerkelement, des ersten Trägers auf einen korrespondierenden fünften Dienstgütefluss in dem ersten Netzwerk nach dem Bestimmen, dass das Endgerät von dem zweiten Netzwerk an das erste Netzwerk übergeben wird; und
Senden (501), durch das Sitzungsverwaltungsfunktion-Netzwerkelement, einer sechsten Nachricht an den Authentifizierungs-, Autorisierungs- und Abrechnungsserver, wobei
die sechste Nachricht die Kennung der ersten Abrechnungssitzung und Informationen korrespondierend mit dem fünften Dienstgütefluss umfasst und die sechste Nachricht dem Authentifizierungs-, Autorisierungs- und Abrechnungsserver angibt, die erste Abrechnungssitzung zu aktualisieren.

10. Verfahren nach Anspruch 9, wobei die Informationen korrespondierend mit dem fünften Dienstgütefluss eines oder mehrere des Folgenden umfassen:
einen Funkzugangstyp korrespondierend mit dem fünften Dienstgütefluss und ein Dienstgüteprofil korrespondierend mit dem fünften Dienstgütefluss.

11. Verfahren nach Anspruch 9, wobei die Informationen korrespondierend mit dem fünften Dienstgütefluss ferner die erste Inrechnungsstellungskennung umfassen.

12. Verfahren nach Anspruch 9, 10 oder 11, wobei das Verfahren ferner Folgendes umfasst:
Abbilden (503), durch das Sitzungsverwaltungsfunktion-Netzwerkelement, des ersten Trägers auf einen korrespondierenden sechsten Dienstgütefluss in dem ersten Netzwerk nach dem Bestimmen, dass das Endgerät von dem zweiten Netzwerk an das erste Netzwerk übergeben wird; und
Senden (503), durch das Sitzungsverwaltungsfunktion-Netzwerkelement, einer siebten Nachricht an den Authentifizierungs-, Autorisierungs- und Abrechnungsserver, wobei die siebte Nachricht die Kennung der zweiten Abrechnungssitzung und Informationen korrespondierend mit dem sechsten Dienstgütefluss umfasst und die siebte Nachricht dem Authentifizierungs-, Autorisierungs- und Abrechnungsserver angibt, die zweite Abrechnungssitzung zu aktualisieren.

13. Kommunikationsvorrichtung (1000), umfassend einen Speicher und einen Prozessor, wobei der Speicher konfiguriert ist zum Speichern von Anweisungen, der Prozessor konfiguriert ist zum Ausführen der in dem Speicher gespeicherten Anweisungen und die Ausführung der in dem Speicher gespeicherten Anweisungen den Prozessor in die Lage versetzt, das Verfahren nach einem der Ansprüche 1 bis 12 durchzuführen.

14. Computerprogrammprodukt, umfassend computerlesbare Anweisungen, wobei, wenn eine Kommunikationsvorrichtung die computerlesbaren Anweisungen liest und ausführt, die Kommunikationsvorrichtung in die Lage versetzt wird, das Verfahren nach einem der Ansprüche 1 bis 12 durchzuführen.

15. Computerlesbares Speichermedium, umfassend computerlesbare Anweisungen, wobei, wenn eine Kommunikationsvorrichtung die computerlesbaren Anweisungen liest und ausführt, die Kommunikationsvorrichtung in die Lage versetzt wird, das Verfahren nach einem der Ansprüche 1 bis 12 durchzuführen.

## Revendications

1. Procédé de communication comprenant les étapes suivantes :
établir (201), par un élément de réseau de fonction de gestion de session, une session d'unité de données de protocole dans un premier réseau pour un dispositif terminal, où la session d'unité de données de protocole comprend un premier flux de qualité de service ;
envoyer (202), par l'élément de réseau de fonction de gestion de session, un premier message à un serveur d'authentification, d'autorisation et de comptabilité, où le premier message comprend un identifiant d'une première session de comptabilité correspondant au premier flux de qualité de service, où l'identifiant de la première session de comptabilité est un identifiant de session de comptabilité, acct-session-ID, ou un identifiant de session, session-ID ;
déterminer que le dispositif terminal est transféré du premier réseau au deuxième réseau ;
mapper (203), par l'élément de réseau de fonction de gestion de session, le premier flux de qualité de service à un premier support correspondant dans un deuxième réseau, où le premier et le deuxième réseaux comprennent respectivement un système de cinquième génération, 5GS, et un système de paquets évolué, EPS ; et
envoyer (204), par l'élément de réseau de fonction de gestion de session, un deuxième message au serveur d'authentification, d'autorisation et de comptabilité, où
le deuxième message comprend l'identifiant de la première session de comptabilité correspondant au premier flux de qualité de service et le deuxième message comprend en outre au moins l'un d'un type d'accès radio correspondant au premier support et d'un profil de qualité de service correspondant au premier support, et le deuxième message indique au serveur d'authentification, d'autorisation et de comptabilité de mettre à jour la première session de comptabilité.

2. Procédé selon la revendication 1, la session d'unité de données de protocole comprenant en outre un deuxième flux de qualité de service, et le procédé comprenant en outre les étapes suivantes :
envoyer (306), par l'élément de réseau de fonction de gestion de session, un troisième message au serveur d'authentification, d'autorisation et de comptabilité, où le troisième message comprend un identifiant d'une deuxième session de comptabilité correspondant au deuxième flux de qualité de service, où l'identifiant de la deuxième session de comptabilité est un identifiant de session de comptabilité, acct-session-ID, ou un identifiant de session, session-ID ;
mapper, par l'élément de réseau de fonction de gestion de session, le deuxième flux de qualité de service au premier support ; et
envoyer, par l'élément de réseau de fonction de gestion de session, un quatrième message au serveur d'authentification, d'autorisation et de comptabilité, où le quatrième message comprend l'identifiant de la deuxième session de comptabilité correspondant au deuxième flux de qualité de service et les informations sur le premier support, et le quatrième message indique au serveur d'authentification, d'autorisation et de comptabilité de mettre à jour la deuxième session de comptabilité.

3. Procédé selon l'une quelconque des revendications 1 et 2, le procédé comprenant en outre les étapes suivantes :
recevoir (406), par l'élément de réseau de fonction de gestion de session, un message de demande de déconnexion provenant du serveur d'authentification, d'autorisation et de comptabilité, où le message de demande de déconnexion comprend l'identifiant de la première session de comptabilité, et le message de demande de déconnexion demande de supprimer une ressource correspondant au premier flux de qualité de service ; et
envoyer (407), par l'élément de réseau de fonction de gestion de session, une demande de support de mise à jour à une passerelle de desserte, où la demande de support de mise à jour demande de supprimer la ressource correspondant au premier flux de qualité de service.

4. Procédé selon la revendication 1, la session d'unité de données de protocole comprenant en outre un troisième flux de qualité de service, et le procédé comprenant en outre les étapes suivantes :
mapper, par l'élément de réseau de fonction de gestion de session, le troisième flux de qualité de service du dispositif terminal au premier support ; et
envoyer (604), par l'élément de réseau de fonction de gestion de session, au serveur d'authentification, d'autorisation et de comptabilité, des premières informations d'indication d'arrêt et un identifiant d'une troisième session de comptabilité correspondant au troisième flux de qualité de service, où les premières informations d'indication d'arrêt indiquent au serveur d'authentification, d'autorisation et de comptabilité de mettre fin à la troisième session de comptabilité.

5. Procédé selon l'une quelconque des revendications 1 à 4, la session d'unité de données de protocole comprenant en outre un quatrième flux de qualité de service, et le procédé comprenant en outre les étapes suivantes :
envoyer, par l'élément de réseau de fonction de gestion de session, un cinquième message au serveur d'authentification, d'autorisation et de comptabilité, où le cinquième message comprend un identifiant d'une quatrième session de comptabilité correspondant au quatrième flux de qualité de service ;
après avoir déterminé que le dispositif terminal est transféré du premier réseau au deuxième réseau, déterminer, par l'élément de réseau de fonction de gestion de session, que le quatrième flux de qualité de service n'est pas mappé à un support dans le deuxième réseau ; et
envoyer (606), par l'élément de réseau de fonction de gestion de session, au serveur d'authentification, d'autorisation et de comptabilité, des deuxièmes informations d'indication d'arrêt et l'identifiant de la quatrième session de comptabilité correspondant au quatrième flux de qualité de service, où les deuxièmes informations d'indication d'arrêt indiquent au serveur d'authentification, d'autorisation et de comptabilité de mettre fin à la quatrième session de comptabilité.

6. Procédé selon l'une quelconque des revendications 1 à 5, dans lequel, lorsque l'identifiant de la première session de comptabilité est acct-session-ID, l'identifiant de la première session de comptabilité comprend un premier identifiant de facturation, une adresse de l'élément de réseau de fonction de gestion de session et des informations d'identification du premier flux de qualité de service, et le premier identifiant de facturation est un identifiant de facturation attribué par l'élément de réseau de fonction de gestion de session à la session d'unité de données de protocole.

7. Procédé selon l'une quelconque des revendications 2, 3, 5 ou 6, lorsqu'elles dépendent de la revendication 2, dans lequel, lorsque l'identifiant de la deuxième session de comptabilité est acct-session-ID, l'identifiant de la deuxième session de comptabilité comprend un premier identifiant de facturation, une adresse de l'élément de réseau de fonction de gestion de session et des informations d'identification de la deuxième qualité de flux de service.

8. Procédé selon l'une quelconque des revendications 1 à 7, dans lequel les informations sur le premier support comprennent en outre un deuxième identifiant de facturation attribué par l'élément de réseau de fonction de gestion de session au premier support.

9. Procédé selon l'une quelconque des revendications 1 à 8, le procédé comprenant en outre les étapes suivantes :
mapper (501), par l'élément de réseau de fonction de gestion de session, le premier support à un cinquième flux de qualité de service correspondant dans le premier réseau après avoir déterminé que le dispositif terminal est transféré du deuxième réseau au premier réseau ; et
envoyer (501), par l'élément de réseau de fonction de gestion de session, un sixième message au serveur d'authentification, d'autorisation et de comptabilité, où
le sixième message comprend l'identifiant de la première session de comptabilité et des informations correspondant au cinquième flux de qualité de service, et le sixième message indique au serveur d'authentification, d'autorisation et de comptabilité de mettre à jour la première session de comptabilité.

10. Procédé selon la revendication 9, dans lequel les informations correspondant à la cinquième qualité de flux de service comprennent un ou plusieurs des éléments suivants :
un type d'accès radio correspondant au cinquième flux de qualité de service, et un profil de qualité de service correspondant au cinquième flux de qualité de service.

11. Procédé selon la revendication 9, dans lequel les informations correspondant au cinquième flux de qualité de service comprennent en outre le premier identifiant de facturation.

12. Procédé selon les revendications 9, 10 ou 11, le procédé comprenant en outre les étapes suivantes :
mapper (503), par l'élément de réseau de fonction de gestion de session, le premier support à un sixième flux de qualité de service correspondant dans le premier réseau après avoir déterminé que le dispositif terminal a été transféré du deuxième réseau au premier réseau ; et
envoyer (503), par l'élément de réseau de fonction de gestion de session, un septième message au serveur d'authentification, d'autorisation et de comptabilité, où
le septième message comprend l'identifiant de la deuxième session de comptabilité et des informations correspondant au sixième flux de qualité de service, et le septième message indique au serveur d'authentification, d'autorisation et de comptabilité de mettre à jour la deuxième session de comptabilité.

13. Appareil de communication (1000), comprenant une mémoire et un processeur, dans lequel la mémoire est configurée pour stocker des instructions, le processeur est configuré pour exécuter les instructions stockées dans la mémoire, et l'exécution des instructions stockées dans la mémoire permet au processeur d'exécuter le procédé selon l'une quelconque des revendications 1 à 12.

14. Produit logiciel, comprenant des instructions lisibles par ordinateur, où, lorsqu'un appareil de communication lit et exécute les instructions lisibles par ordinateur, l'appareil de communication est activé pour exécuter le procédé selon l'une quelconque des revendications 1 à 12.

15. Support de stockage lisible par ordinateur, comprenant des instructions lisibles par ordinateur, dans lequel, lorsqu'un appareil de communication lit et exécute les instructions lisibles par ordinateur, l'appareil de communication est activé pour exécuter le procédé selon l'une quelconque des revendications 1 à 12.
